(19) Europäisches Patentamt
European Patent Office
Office européen des brevets

(11) **EP 3 835 558 B1**

(12) **EUROPEAN PATENT SPECIFICATION**

(45) Date of publication and mention
of the grant of the patent:
**04.01.2023 Bulletin 2023/01**

(51) International Patent Classification (IPC):
**F02C 6/08** *(2006.01)* **B64D 13/06** *(2006.01)*
**B64D 15/04** *(2006.01)*

(21) Application number: **20208164.2**

(22) Date of filing: **17.11.2020**

(52) Cooperative Patent Classification (CPC):
**F02C 6/08; B64D 13/06; B64D 15/04;**
B64D 2013/0607; B64D 2013/0618;
F05D 2270/306; Y02T 50/50

(54) **ENVIRONMENTAL CONTROL SYSTEM**

UMWELTKONTROLLSYSTEM

SYSTÈME DE CONTRÔLE ENVIRONNEMENTAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.12.2019 GB 201917966**

(43) Date of publication of application:
**16.06.2021 Bulletin 2021/24**

(73) Proprietor: **Rolls-Royce plc
London N1 9FX (GB)**

(72) Inventor: **Ippedico, Salvatore
Derby, Derbyshire DE24 8BJ (GB)**

(74) Representative: **Rolls-Royce plc
Intellectual Property Dept SinA-48
PO Box 31
Derby DE24 8BJ (GB)**

(56) References cited:
**EP-A1- 3 219 620      EP-A2- 1 640 673
US-A- 4 523 517      US-A1- 2016 369 705**

## Description

## Field of the Disclosure

The present disclosure relates to an environmental control system for an aircraft and a controller for the environmental control system.

## Background of the Disclosure

Most aircraft feature an environmental control system (ECS) to supply conditioned air at a suitable temperature and pressure to the cabin. In some cases, the ECS also provides pressurised air to key sub-systems such as wing and engine anti-icing sub-systems.

In known systems (e.g. civil aircraft), the source of pressurised air for the ECS is represented by bleeds from the engine core compressors of the gas turbine engines of the aircraft. High pressure and high temperature bleed airflow is extracted from a low pressure port of each engine when the engine is operated at high power settings, such as during cruise. A high pressure port is also provided to supply air during low power settings operations, when the pressure at the low pressure port would not meet the ECS demand. In both cases, a pressure regulating valve is provided to maintain the bleed pressure under acceptable limits.

A portion of this bleed is sometimes used for engine or wing anti-icing purposes, or conveyed to other aircraft systems requiring pneumatic actuation. The remaining flow enters an air conditioning pack, where the air is cooled down to meet the cabin conditioning demand. A number of air conditioning packs may be provided that may, for example, each be served by a particular turbine engine of the aircraft. The conditioned airflow is delivered to a mixing manifold where it is mixed with a portion of the cabin air prior to being discharged into the aircraft cabin.

The airflow through the air conditioning pack is commonly controlled by a flow control valve assembly (e.g. a butterfly valve). This flow control valve may be controlled so as to provide a target (i.e. desired) flow rate through the air conditioning pack (and into the cabin).

The pressure regulating valve (for maintaining bleed pressure under acceptable limits) and the flow control valve both result in energy dissipation from the ECS. In other words, the bleed flow management of the ECS represents an inefficiency that ultimately increases the engine power offtake required to meet ECS demand (so as to in increase aircraft fuel consumption).

United States patent US 4523517 A describes a means of controlling the air flow from an aircraft using an electric compressor that is controlled using an environmental control system. The ECS is controlled by a pressure sensor which feeds into a logic circuit.

United States patent application US 2016/0369705 A1 describes a bleed air and engine starter system that employ a shaft-driven compressor to start an aircraft engine and/or to supply pressurized air to one or more systems of an aircraft. The compressor signal is controlled by an input form a user.

European patent application EP 3219620 A2 describes an engine bleed control system for a gas turbine engine. The engine bleed control system also includes a controller operable to selectively drive the motorized compressor to boost a bleed air pressure from the engine bleed tap as pressure augmented bleed air and control delivery of the pressure augmented bleed air to an aircraft use.

European patent application EP 1640673 A2 describes an air conditioning system includes an air conditioning pack for receiving pressurized air and converting the pressurized air into conditioned air for an aircraft. A compressed air system is used which includes a compressor driven by an electric motor. The electric motor is commanded by a controller to provide pressurized air when needed.

There is a need for an improved ECS which mitigates at least some of the problems associated with such known systems.

## Summary of the Disclosure

In a first aspect there is provided a blower controller for controlling a blower that supplies a pressurised airflow to an air conditioning pack of an aircraft, the blower controller comprising:

> a pack flow demand adjustment module configured to:
>
>> receive a pack flow demand signal representative of a desired flow rate of an airflow supplied by the air conditioning pack, and a blower condition signal indicative of a condition of an intake airflow received by the blower; and
>> determine a corrected pack flow demand based on the pack flow demand and the blower condition signal; and
>
> a first control signal generator configured to receive the corrected pack flow demand and generate a first control signal to control a first operating parameter of the blower in response to the corrected pack flow demand.

The disclosed controller may facilitate the provision of an aircraft environmental control system that does not require a number of pressure regulating and flow control valves present in the known systems discussed above. Such pressure regulating and flow control valves are associated with pressure losses and thus represent inefficiencies in those systems. By providing a controller that facilitates environmental control without these valves, such environmental control may be performed more efficiently. This may lead to reduced power offtake from the engines of the aircraft and thus reduced fuel consumption.

Optional features will now be set out. These are applicable singly or in any combination with any aspect, within the scope of the appended claims.

The blower condition signal may be indicative of the pressure of the intake airflow. The blower condition signal may be indicative of the temperature of the intake airflow. The blower condition signal may be indicative of both pressure and temperature of the intake airflow. Thus, for example, the corrected mass flow demand may be calculated according to the following relationship:

$$\omega c = \omega \sqrt{\frac{T_{in}}{T_{ref}}} / (\frac{P_{in}}{P_{ref}})$$

where $T_{in}$ and $P_{in}$ are the temperature and pressure indicated by the blower condition signal, $T_{ref}$ and $P_{ref}$ are reference temperature and pressure (e.g. at sea level), and $\omega$ is the pack flow demand.

The pack flow demand signal may be representative of a desired mass flow rate. In other embodiments the pack flow demand signal may be representative of a desired volumetric flow rate.

The first control signal generator may be configured to generate the first control signal according to a control schedule that determines the first control signal given the corrected pack flow demand. The control schedule may comprise a transfer function that receives the corrected pack flow demand as an input and provides the first control signal as an output.

The transfer function may be a linear transfer function. The transfer function may be optimised so as to provide maximum blower efficiency during a particular aircraft flight condition, such as when the aircraft is operating according to a cruise condition.

The control schedule may only comprise a single transfer function. Alternatively, the control schedule may comprise a plurality of transfer functions. In such embodiments, the transfer function (for determining the control signal) may be selected by the first control signal generator from the plurality of transfer functions.

Each transfer function of the plurality of transfer functions may be representative of an operating state of a system of the aircraft. The first control signal generator may be configured to receive a signal indicative of the operating state of the system and select a transfer function that is representative of the indicated operating state.

For example, each transfer function of the plurality of transfer functions may be representative of an operating state of an anti-icing system of the aircraft. In this respect, the first control signal generator may be configured to receive a signal indicative of the operating state of the anti-icing system and select a transfer function of the plurality of transfer functions that is representative of the indicated operating state.

The operating state of the anti-icing system may, for example, comprise whether one or more sub-systems of the anti-icing system are in an active state or a deactivated state. Such sub-systems may, for example, comprise a wing anti-icing sub-system or an engine anti-icing sub-system. As will be described further below, in some systems a portion of the air supplied by the blower (controlled by the blower controller) may be diverted to the anti-icing system. Thus, the provision of a plurality of transfer functions (that are selectable by the blower controller) may allow for compensation of this diversion of airflow.

In one example, a first transfer function of the plurality of transfer functions of the control schedule may be selected by the first control signal generator when neither the wing anti-icing or engine anti-icing sub-systems are activated (as indicated by the anti-icing sensor). The first transfer function may be referred to as the baseline transfer function. The baseline transfer function may be configured so as to provide maximum blower efficiency during a particular flight condition, such as when the aircraft is operating according to a cruise condition. A second transfer function may be selected when only the engine anti-icing sub system is activated. A third transfer function may be selected when only the wing anti-icing sub-system is activated. Finally, a fourth transfer function may be selected when both the wing anti-icing and engine anti-icing sub-systems are activated.

Where each transfer function is a linear transfer function, the transfer functions may differ in gradient. Alternatively or additionally, each transfer function may comprise an offset constant that differs between the transfer functions. As may be appreciated, the offset constant may be reflective of the extra capacity required to supply airflow to the anti-icing system. Thus, the larger the offset constant of a respective transfer function is, the larger the blower speed or variable geometry setting is for a given corrected pack flow demand.

Alternatively, or additionally, each transfer function of the plurality of transfer functions may be representative of an operating state of one or more blowers of the aircraft (i.e. further blowers of the aircraft in addition to the abovementioned blower). In this respect, the first control signal generator may be configured to receive a signal indicative of an operating state of a blower of the aircraft and select a transfer function that is representative of the indicated operating state of the blower.

The first control signal generator may comprise two control schedules. Both control schedules may comprise a single transfer function. A first control schedule of the two control schedules may be configured to determine a preliminary first control signal given the corrected pack flow demand. A second control schedule may be configured to determine a correction signal given an operating state of a system of the aircraft (e.g. anti-icing system and/or blower/engine system). The second control schedule may thus receive a signal indicative of an operating state of a system of the aircraft. The operating state may be a continuous (rather than discrete) state. For example, the state may be the opening size of a valve of the anti-icing system (i.e. so as to be indicative of the proportion of airflow diverted to the anti-icing system).

The first control signal generator may be configured to adjust or correct the preliminary first control signal according to the correction signal so as to generate the first control signal (i.e. for controlling the blower).

The controller comprises a second control signal generator configured to receive the pack flow demand signal and a measured pack flow signal indicative of a measured mass (or volumetric) flow rate of an airflow supplied by the air conditioning pack. The second signal generator may further be configured to compare the pack flow demand signal with the measured pack flow signal. The second control signal generator may be configured to generate a second control signal, in response to the comparison of the pack flow demand and measured pack flow signal, to control a second operating parameter of the blower. In this respect, the second control signal generator may be configured so as to operate as a proportional-integral (PI) or proportional-integral-derivative (PID) controller.

The first and second operating parameters may be such that they relate to (i.e. affect) a mass flow rate (or volumetric flow rate) of the blower. The first operating parameter may be a variable geometry position of the blower. The second operating parameter may be a blower speed of the blower (i.e. a rotational speed of an impeller of the blower).

Alternatively, the first operating parameter may be a blower speed of the blower. The second operating parameter may be a variable geometry position of the blower.

In a second aspect there is provided an aircraft environmental control system comprising:

a blower configured to supply a pressurised airflow;

an air conditioning pack configured to receive the pressurised airflow from the blower and supply a conditioned airflow to an internal space of the aircraft;

a pack flow demand sub-system configured to determine a pack flow demand, representative of a desired flow rate of the conditioned airflow supplied by the air conditioning pack; and

a blower controller as described above with respect to the first aspect.

As is discussed above, the provision of a blower that pressurises airflow for the environmental control system, and an associated controller that controls the blower to meet pack flow demand, may result in a more efficient system. Managing airflow through the pack flow via control of the blower may eliminate the need for a flow control valve at the air conditioning pack or pressure regulating valves, which may in turn avoid the inefficiencies presented by such valves.

The blower may be e.g. a centrifugal compressor. The blower may comprise variable geometry and in this respect, may be referred to as a variable geometry compressor. For example, the blower may comprise variable (i.e. movable) outlet guide vanes that, when moved, alter the flow of air discharged from the blower.

The blower may be configured for operative connection to a driver for driving (i.e. rotating) the blower. For example, the blower may be driven (i.e. mechanically) by a gas turbine engine of the aircraft (or may be configured to be driven by a gas turbine engine). The blower may be operatively (mechanically) connected to the gas turbine engine (e.g. one or more shafts of the gas turbine engine) by way of a transmission assembly, which may include an ancillary gearbox of the turbine engine. The transmission assembly may be configured to receive a rotational input and provide a rotational output that is different (e.g. in rotational speed) to the rotational input. For example, the transmission assembly may comprise a continuously variable transmission. The continuously variable transmission may allow the blower speed (i.e. speed of rotation of an impeller of the blower) to be independent of the engine shaft speed.

The driver may alternatively be an electric motor (i.e. the blower may be driven by an electrical motor). In such embodiments, the blower may be connected to the electric motor directly or via a transmission assembly (e. g. including a continuously variable transmission) as discussed above.

The blower may receive an intake airflow from the turbine engine. The turbine engine may comprise a fan and an engine core including one or more compressors, one or more turbines and one or more shafts connecting the compressor(s) and turbine(s). A portion of the air discharged by the turbine engine fan (i.e. downstream of the fan) may enter the engine core, whilst the remaining portion of airflow may flow into a bypass duct of the turbine engine. The intake airflow may be received by the blower from the bypass duct of the turbine engine. For example, the bypass duct may comprise one or more scoops (i.e. outlets) for diverting airflow to the blower.

In some embodiments, the system may comprise a pre-cooler in between the blower and the air conditioning pack. The pre-cooler may receive a cooling airflow from the bypass duct of the turbine engine. The cooling airflow may bypass the blower and may exchange heat with the pressurised airflow from the blower in the pre-cooler, so as to cool the pressurised air. For example, the pre-cooler may cool the pressurised air to maintain the temperature of the pressurised air below 200 °C. The cooled (and pressurised) airflow may then flow to the air conditioning pack for conditioning.

The system may further comprise a blower sensor for measuring a condition of the airflow received by the blower (i.e. the intake airflow). The blower sensor may be a temperature sensor for measuring the temperature of the pressurised airflow supplied by the blower. The blower sensor may alternatively be a pressure sensor for measuring the pressure of the pressurised airflow. The system may comprise both a pressure sensor and a temperature sensor for respectively measuring the pressure and temperature of the pressurised airflow received by the blower.

The blower sensor(s) may generate the condition signal indicative of the measured condition of the intake airflow (e.g. indicative of temperature and/or pressure of the intake airflow). The condition signal(s) may be received by the blower controller and, as discussed above with respect to the first aspect, the blower controller may, in response to the condition signal(s), control the blower so as to alter an operating parameter of the blower.

The system may further comprise a (e.g. mass) flow rate sensor for measuring the (e.g. mass) flow rate of an airflow through the air conditioning pack. For example, the flow rate sensor may measure the flow rate of the pressurised airflow received at the air conditioning pack, the conditioned air supplied by the air conditioning pack, or an intermediate airflow within the air conditioning pack (i.e. intermediate the received and supplied airflows).

The flow rate sensor may generate a pack flow rate signal indicative of the mass (or volumetric) flow rate of the airflow at the air conditioning pack. The pack flow rate signal may be received by the blower controller and, as is discussed above with respect to the first aspect, the blower controller may, in response to the pack flow rate signal, control the blower so as to alter an operating parameter of the blower (e.g. to alter a mass flow rate of the airflow supplied by the blower).

The blower controller may control a position of the variable geometry (e.g. outlet vanes) of the blower. For example, the first or second control signal generated by the blower controller may control the position of the variable geometry of the blower (e.g. by way of an actuator). The blower controller may control the position of the variable geometry between an open position and a closed position. In the open position the variable geometry may have a maximum airflow capacity (i.e. permitting the maximum airflow rate for a given blower speed). In the closed position the variable geometry may have an airflow capacity that is less than the airflow capacity when the variable geometry is in the open position (e.g. less than the maximum airflow capacity). In the closed position, the variable geometry may not necessarily be fully closed (i.e. airflow may still be permitted through the variable geometry). The blower controller may control a rotational speed of the blower (i.e. rotational speed of an impeller of the blower/compressor). The first or second control signal may control the blower speed. In this way, the blower controller may control a (mass) flow rate of the air supplied by (i.e. discharged from) the blower. The blower controller may control the speed of the blower via control of the transmission assembly. For example, the blower controller may control the continuously variable transmission of the transmission assembly so as to alter the blower speed.

The environmental control system may comprise an anti-icing system. The environmental control system may comprise an anti-icing sensor to detect an operating state of the anti-icing system. The environmental control system may comprise a wing anti-icing sensor and an engine anti-icing sensor to respectively detect an operating state of wing anti-icing and engine anti-icing sub-systems of the anti-icing system. For example, the sensors may detect whether the respective sub-system is in an activated state or a deactivated state. The sensor may alternatively detect a parameter of the anti-icing system or sub-system, such as a valve opening size for a valve controlling airflow to the anti-icing system.

The or each anti-icing sensor may generate a signal indicative of the operating state of the anti-icing system and transmit the signal to the blower controller (for use by the controller in a manner described in the first aspect).

Such an arrangement may allow the system to accommodate changes in airflow demand from the anti-icing system without the need for additional mass flow sensors for the aircraft anti-icing system. This may reduce the number of failure modes for the system and improve robustness of the system.

In some embodiments, the environmental control system may comprise one or more further blowers. Each blower may supply a pressurised airflow to the air conditioning pack, or a further air conditioning pack, for subsequent supply of a conditioned airflow to the internal space of the aircraft. In such embodiments, each of the plurality of transfer functions of the control schedule may additionally or alternatively be associated with an operating condition of one or more of the further blowers. In the event of one or more of the blowers the aircraft become inactive, the environmental control system may be required to compensate for the loss of airflow by increasing the airflow provided by the remaining blower(s). This may occur, for example, as a result of a failure of a gas turbine engine of the aircraft (when power to the blower is supplied by the gas turbine engine).

In a third aspect there is provided an aircraft comprising an environmental control system as described above with respect to the second aspect.

**Brief Description of Drawings**

Embodiments will now be described by way of example only, with reference to the figures, in which:

Figure 1 is a schematic of an aircraft environmental control system;

Figure 2 is a schematic of a blower controller according to a first embodiment;

**Figures 3, 4 and 5** are variations of a control schedule for the blower controller of the first embodiment;

**Figure 6** is schematic of a blower controller according to a second embodiment; and

**Figure 7** is a schematic of a blower controller according to a third embodiment.

**Detailed Description**

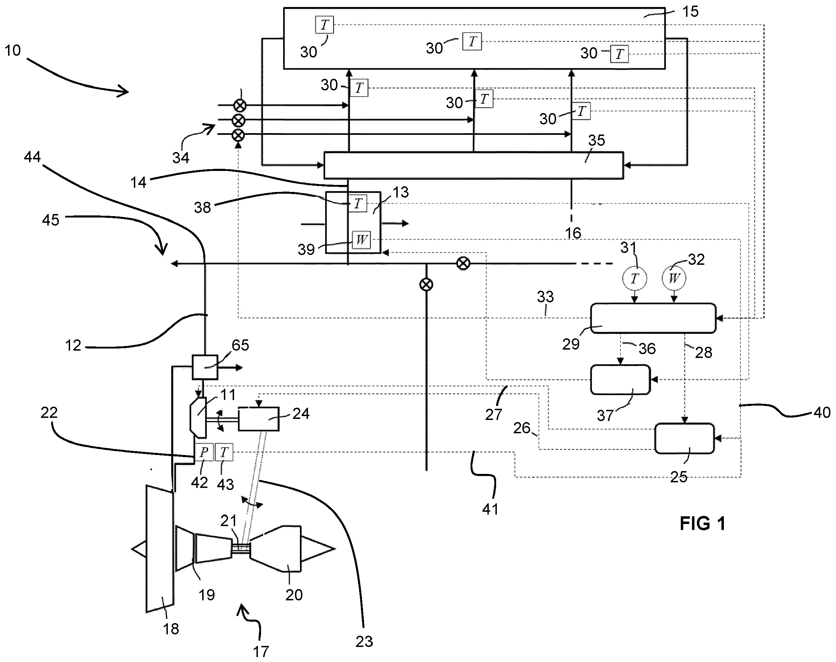

**Figure 1** illustrates an aircraft environmental control system 10 comprising a blower 11 for supplying a pressurised airflow 12 and an air conditioning pack 13 that receives the pressurised airflow 12 from the blower 11 and supplies a conditioned airflow 14 to an internal space (cabin) 15 of the aircraft. In the present embodiment, a pre-cooler 65 is disposed between the blower 11 and the air conditioning pack 13 to cool the pressurised airflow 12 prior to entering the air conditioning pack 13.

The blower 11 is in the form of a variable geometry centrifugal compressor that pressurises the airflow and that is driven by a turbine gas engine 17 of the aircraft. The gas turbine engine 17 comprises a fan 18, a compressor 19 and a turbine, 20, which are all operatively connected by a shaft 21. An airflow 22 is supplied to the blower 11 by the fan 18. For example, the airflow 22 may be supplied from a bypass duct of the turbine engine 17 (e.g. via a scoop in the bypass duct).

The blower 11 is operatively connected to the shaft 21 by a transmission assembly 23, such that rotation of the shaft 21 causes rotation of the impellers of the blower 11. The transmission assembly 23 comprises a continuously variable transmission (CVT) 24, which alters the rotational speed of the impeller of the blower 11 (the "blower speed") relative to the rotational speed of the shaft 21 of the turbine engine 17. In this way, the blower speed is independent of the shaft 21 rotational speed.

The blower 11 is controlled by a blower controller 25. In particular, the blower controller 25 controls both the blower speed (e.g. via control of the CVT 23) and the position of the variable geometry (i.e. position of guide vanes of the variable geometry) of the blower 11 so as to alter the mass flow rate of the pressurised airflow 12 supplied by the blower 11. In order to provide such control, the blower controller 25 controller generates a variable geometry control signal 26 and a blower speed control signal 27 that are respectively communicated to the blower 11 and the CVT 24.

As will be described in more detail below, the blower speed 27 and variable geometry 26 control signals are both generated in response to a pack flow demand signal 28 received by the blower controller 25 from a pack flow demand sub-system of a zonal controller 29 (which, in other embodiments, may form part of the blower controller 25).

The zonal controller 29 generates the pack flow demand signal 28 partly based on a plurality of temperature signals received from temperatures sensors 30 measuring the temperature of the air in the cabin 15 and the temperature of the air delivered to the cabin. The zonal controller 29 also receives a temperature selector input 31 and a ventilation flow selector input 32. The pack flow demand signal 28 is generated based on the ventilation flow selector input 32. In some cases the pack flow demand signal may be adjusted by the zonal controller 29 based on additional input signals, such as cabin temperature or bleed source.

In addition to the pack flow demand signal 28, the zonal controller 29 generates a trim air valve control signal 33. This signal 33 controls three trim air valves 34, which adjust a supply of hot trim air that is combined with the conditioned air 14 from the air conditioning pack 13. In particular, the conditioned air 14 enters a manifold 35, where it is split into three separate air streams that are each supplied to different locations (or zones) of the aircraft cabin 15. Of course, in other embodiments, the aircraft may comprise more zones or less zones (than three zones) and may comprise more than three air streams or less than three air streams.

Although not immediately apparent from the figure, this manifold 35 may also receive conditioned airflow from further blowers 16 that are driven by further gas turbine engines of the aircraft.

The three trim air valves 34 control three trim air streams that each merge with a corresponding conditioned air stream prior to entering the cabin 15. In other embodiments, more or less trim air valves may be provided. The trim air streams are hotter than the conditioned air streams, such that by altering the flow rate of a particular trim air stream (i.e. by a corresponding valve 34), the system 10 is able to alter the temperature of the air supplied to a particular zone of the cabin 15.

The zonal controller 29 also generates a cooling demand signal 36, which is transmitted to a pack controller 37 for controlling the air conditioning pack 13. The pack controller 37 controls the air conditioning pack 13 based on the cooling demand signal 36 and a pack temperature signal received from a temperature sensor 38 and which is indicative of a temperature of the pack 13.

The blower controller 25, in addition to the pack flow demand signal 28 (from the zonal controller 29), receives a pack flow rate signal 40 from a sensor 39 that measures the airflow mass flow rate through the pack 13. The blower controller 25 additionally receives blower intake condition signals 41 in the form of pressure and temperature signals respectively generated by a pressure sensor 42 and a temperature sensor 43 located at the blower 11 inlet/intake.

The blower controller 25 generates the variable geometry control signal 26 and the blower speed control signal 27 based on the condition signals 41, the pack flow demand signal 28 and the pack flow rate signal 40, so as to alter the mass flow rate of the pressurised airflow 12 supplied by the blower 11. As will be described in more detail below, the blower controller 25 may compensate for additional factors. One such factor may be the operating state of an anti-icing system 45 of the aircraft. The environmental control system 10 may divert some of the pressurised air 12 supplied by the blower 11 to the anti-icing system for use by the anti-icing system in de-icing components of the aircraft (e.g. wings and engine). This diversion of the pressurised air 12 means that less air is supplied to the cabin 15 and in some cases this must be compensated for.

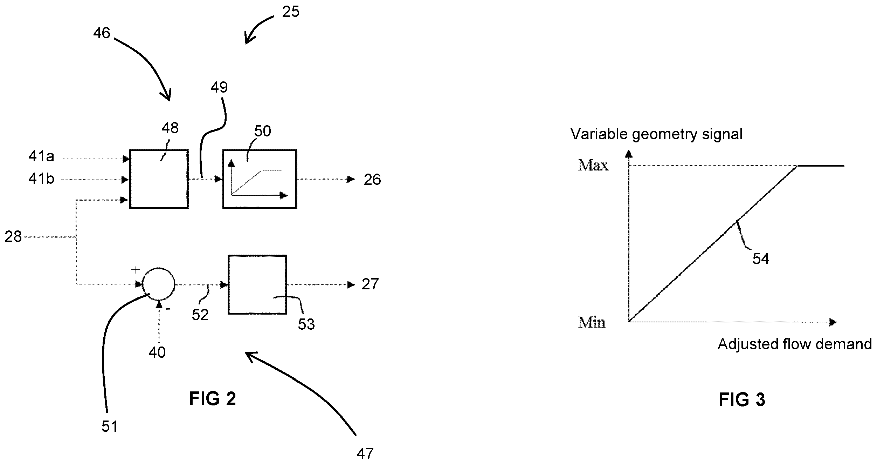

The operation of the blower controller 25 is apparent from Figures 2, 3 and 4 which schematically depict variations in how the blower controller 25 may be configured. Similar components of these variations have been assigned the same reference numerals. In each of the variations of Figures 2, 3 and 4, the blower controller 25 receives a blower temperature signal 41a, a blower pressure signal 41b, a pack flow demand signal 28 and a pack flow rate signal 40. Similarly, in each variation, the blower controller 25 generates and transmits a variable geometry control signal 26 and a blower speed control signal 27.

In **Figure 2,** the blower controller 25 comprises a variable geometry module 46 and a blower speed module 47 that are generally defined by two branches in the schematic. The variable geometry module 46 receives the temperature signal 41a, pressure signal 41b and pack demand signal 28 and processes those signals in a pack flow demand adjustment module 48. The pack flow demand adjustment module 48 adjusts the pack demand signal 28 based on the temperature 41a and pressure 41b signals in order to generate a corrected pack demand 49. The corrected pack demand 49 is received by a first control signal generator 50 that generates the variable geometry control signal 26 based on the corrected pack demand 49.

The blower speed module 47 comprises second control signal generator that includes a pack flow error module 51 that compares the pack flow demand signal 28 with the measured pack flow rate signal 40. The pack flow error module 51 may be in the form of a PI or PID controller and generates an error signal 52 that is based on the difference between the pack flow demand signal 28 and the pack flow rate signal 40. This error signal 52 is used by a conversion module 53, which generates the blower speed control signal 27 (transmitted to the blower 11).

**Figure 3** illustrates an exemplary control schedule that may be used by the first control signal generator 50 to provide a variable geometry control signal. In this embodiment, the schedule includes a single linear transfer function 54. The "max" configuration is representative of the variable geometry (i.e. outlet guide vanes) of the compressor 16 being in a position that exhibits the maximum flow capacity (i.e. a fully open position). As is apparent from the figure, the transfer function provides a gradual opening of the variable geometry in response to an increase in the corrected pack flow demand received from the pack demand adjustment module 48.

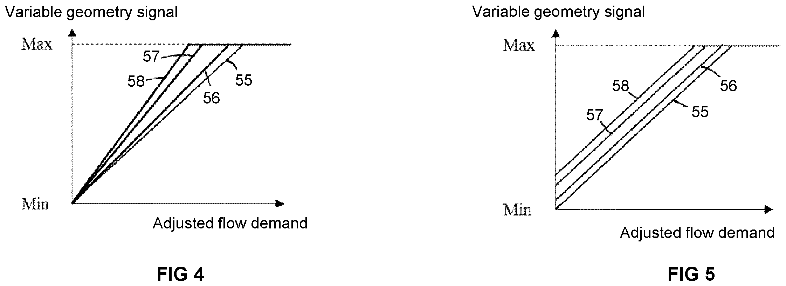

**Figure 4** depicts a further exemplary control schedule for the first control signal generator 50, which accommodates the diversion of air to the anti-icing system 45. This schedule comprises four transfer functions: a first (baseline) transfer function 55 that is selected when no air is diverted to the anti-icing system, a second transfer function 56 that is selected when air is diverted for engine anti-icing only, a third transfer function 57 that is selected when air is diverted for wing anti-icing only, and a fourth transfer function 58 that is selected when air is diverted for both wing and engine anti-icing.

As is evident from the figure, each transfer function 55, 56, 57, 58 provides a different relationship between the variable geometry control signal and the received corrected flow demand. In particular, the transfer functions 55, 56, 57, 58 differ in their gradient. All of the transfer functions 55, 56, 57, 58 provide a minimum variable geometry at the same corrected flow demand, but differ in the rate at which the variable geometry is opened with respect to corrected flow demand. As a result, for example, the fourth transfer function 58 (representing both wing and engine anti-icing) reaches the maximum variable geometry at a lower corrected flow demand than the first (baseline) transfer function 55). In this way, the system 10 can ensure that air diverted to the anti-icing system 45 is compensated for by an increase in the airflow rate from the blower 11.

Although not shown, it should be appreciated that in order to select the appropriate transfer function 55, 56, 57, 58, the first control signal generator 50 may receive information regarding the operating state of the anti-icing system 45. For example, the engine and wing anti-icing sub-systems may each comprise a sensor that detects the state of the sub-system and transmits this to the first control signal generator 50. Such a sensor may, for example, detect the opening of a valve for controlling air supply to the sub-system.

In other embodiments, the control schedule of the first control signal generator 50 may include transfer functions that represent an operating condition one or more blowers of the system. This may be in combination with the anti-icing system state, or as an alternative. In this way, if one blower becomes inactive (e.g. due to an engine failure), the remaining blowers may compensate for the loss of airflow from the inactive blower.

**Figure 5** illustrates an alternative schedule to that shown in Figure 4 and described above and, accordingly, the transfer functions 55, 56, 57, 58 have been provided with the same reference numerals. Rather than differing in gradient, the transfer functions 55, 56, 57, 58 of Figure 5 differ by way of an offset constant. In this way, the rate of opening of the variable geometry in response to corrected flow demand is the same for each of the transfer functions 55, 56, 57, 58, but the offset constant means that, for example, the fourth transfer function 58 provides a greater variable geometry value than the other transfer functions 55, 56, 57 for a given corrected flow demand.

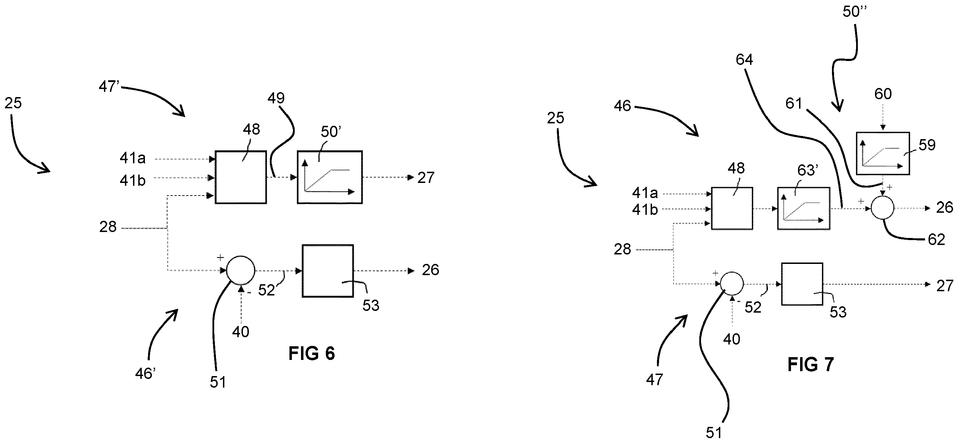

**Figure 6** illustrates an embodiment of the blower controller 25 that is similar to the embodiment shown in Figure 2, except that the blower speed module 47' of Figure 3 takes the form of the variable geometry module 46 of Figure 2, and the variable geometry module 46' of Figure 3 takes the form of the blower speed module 47 of Figure 2. In other words, the blower speed module 47' of Figure 3 comprises a pack demand adjustment module 48 and the first control signal generator 50, and the variable geometry module 46' comprises a pack flow error module 51 and conversion module 53 of the second control signal generator (which, in this case, generates the variable geometry control signal 26).

As may be appreciated the first control signal generator 50' of the embodiment of Figure 6 may be similar to those shown in figures 3, 4 and 5 except that the output provided by the first control signal generator 50' is a blower speed rather than a variable geometry position.

**Figure 7** differs from the embodiment of Figure 2 in that the first control signal generator comprises first 63 and second 59 control schedules. The first control schedule 63 comprises a single transfer function (such as that shown in Figure 3). Thus, the first transfer function module 63 does not compensate for e.g. the diversion of airflow to the anti-icing system 45. The second schedule 59 also comprises a single transfer function that, as will be described below, compensates for external factors (such as the activation of the anti-icing system 45).

In one example, the second control schedule 59 receives a valve opening signal 60 that is indicative of the state of a valve of the anti-icing system 45 (i.e. indicative of an opening size of the valve). For example, the valve opening signal 60 may be indicative of the opening size of a wing and/or engine anti-icing valve. The second control schedule 59 may be similar to that show in figures 4 and 5, except that the input of those transfer functions is the state of the valve and the output is a correction value (transmitted as a correction signal 61).

The first signal generator 50" of the embodiment of Figure 7 further comprises a correction module 62 that determines the variable geometry control signal 26 based on the correction signal 61 and a preliminary control signal 64 received from the first control schedule 63. In other words, the correction signal "corrects" the preliminary variable geometry controls signal 64 so as to compensate for the provision of airflow to the anti-icing system 45.

**Claims**

1. A blower controller (25) for controlling a blower (11) that supplies a pressurised airflow (12) to an air conditioning pack (13) of an aircraft environmental control system (10), the blower controller (25) comprising:

a pack flow demand adjustment module (48) configured to:

receive a pack flow demand signal (28) representative of a desired mass flow rate of an airflow supplied by the air conditioning pack (13), and a blower condition signal (41) indicative of a condition of an intake airflow received by the blower (11); and determine corrected pack flow demand (49) based on the pack flow demand (28) and the blower condition signal (41); and

a first control signal generator (50) configured to receive the corrected pack flow demand (49) and generate a first control signal (26) to control a first operating parameter of the blower (11) in response to the corrected pack flow demand (49), and the controller **characterized by** further comprising a second control signal generator configured to

receive the pack flow demand signal (28) and a measured pack flow signal (40) indicative of a measured mass flow rate of an airflow supplied by the air conditioning pack (13);
compare the pack flow demand signal (28) with the measured pack flow signal (40); and
generate a second control signal (27), based on the comparison of the pack flow demand (28) and measured pack flow signal (40), to control a second operating parameter of the blower (11).

2. The controller (25) according to claim 1 wherein the blower condition signal (41) is indicative of the pressure and/or the temperature of the intake airflow.

3. The controller (25) according to claim 1 or 2 wherein the first control signal generator (50) is configured to generate the first control signal (26) according to control schedule comprising a transfer function (54) that receives the corrected pack flow demand as an input and provides the first control signal (26) as an output.

4. The controller (25) according to claim 3 wherein the control schedule comprises a plurality of transfer functions (55, 56, 57, 58) and the first control signal generator (50) is configured to select a transfer function (55, 56, 57, 58) from the plurality of transfer functions (55, 56, 57, 58) to generate the first control signal (26).

5. The controller (25) according to claim 4 wherein each transfer function (55, 56, 57, 58) of the plurality of transfer functions (55, 56, 57, 58) is representative of an operating state of an anti-icing system of the aircraft, the first control signal generator (50) being configured to receive an anti-icing signal indicative of an operating state of the anti-icing system and select a transfer function (55, 56, 57, 58) of the control schedule that is representative of the indicated operating state.

6. The controller (25) according to claim 4 or 5 wherein each transfer function (55, 56, 57, 58) of the plurality of transfer functions (55, 56, 57, 58) is representative of an operating state of a blower (11) of the aircraft, the first control signal generator (50) being configured to receive a signal indicative of an operating state of a blower (11) of the aircraft and select a transfer function (55, 56, 57, 58) that is representative of the indicated operating state of the blower (11).

7. The controller (25) according to claim 1 wherein the first operating parameter is a variable geometry position of the blower (11) and the second operating parameter is a blower speed of the blower.

8. The controller (25) according to claim 1 wherein the first operating parameter is a blower speed of the blower (11) and the second operating parameter is a variable geometry position of the blower.

9. An aircraft environmental control system (10) comprising:

   a blower (11) configured to supply a pressurised airflow (12);
   an air conditioning pack (13) configured to receive the pressurised airflow (12) from the blower (11) and supply a conditioned airflow (14) to an internal space (15) of the aircraft;
   a pack flow demand sub-system (29) configured to determine a pack flow demand (28), representative of a desired mass flow rate of the conditioned airflow supplied by the air conditioning pack (13); and
   a blower (11) controller according to any one of the preceding claims.

10. The aircraft environmental control system (10) according to claim 9 wherein the blower (11) comprises a compressor having variable geometry for varying the mass flow rate of the airflow supplied by the blower (11).

11. The aircraft environmental control system (10) according to claim 9 or 10 further comprising a driver (17) for driving the blower (11) and a transmission assembly (24) operatively connecting the driver (17) to the blower (11), the transmission assembly (24) comprising a continuously variable transmission to rotate the blower (11) at a rotational speed that is different to the rotational speed of the driver (17).

12. The aircraft environmental control system (10) according to any one of claims 9 to 11 further comprising a blower sensor (42, 43) configured to measure a condition of an intake airflow received by the blower (11), generate a condition signal (41) indicative of the measured condition, and transmit the condition signal (41) to the blower controller (25).

13. The aircraft environmental control system (10) according to any one of claims 9 to 12 further comprising a flow rate sensor (39) configured to measure the mass flow rate of an airflow through the air conditioning pack (13), generate a measured pack flow rate signal (40) indicative of the measured mass flow rate, and transmit the measured pack flow rate signal (40) to the blower controller (25).

14. The aircraft environmental control system (10) according to any one claims 9 to 13 further comprising an anti-icing sensor configured to detect an operating state of an anti-icing system (45), generate an anti-icing signal indicative of the operating state of the anti-icing system (45) and transmit the anti-icing signal to the blower controller (25).

**Patentansprüche**

1. Gebläsesteuerung (25) zum Steuern eines Gebläses (11), das einen unter Druck stehenden Luftstrom (12) zu einem Klimaanlagen-Pack (13) einer Luftfahrzeug-Klimatisierungsanlage (10) liefert, wobei die Gebläsesteuerung (25) umfasst:
ein Pack-Strömungsbedarfsanpassungsmodul (48), das konfiguriert ist zum:

   Empfangen eines Pack-Strömungsbedarfssignals (28), das eine erwünschte Massenströmungsrate eines Luftstroms, der von dem Klimaanlagen-Pack (13) geliefert wird, darstellt, und eines Gebläsezustandssignals (41), das einen Zustand eines Einlassluftstroms, der von dem Gebläse (11) empfangen wird, angibt; und Bestimmen des korrigierten Pack-Strömungsbedarfs (49) basierend auf dem Pack-Strömungsbedarf (28) und dem Gebläsezustandssignal (41); und
   einen ersten Steuersignalgenerator (50), der dazu konfiguriert ist, den korrigierten Pack-Strömungsbedarf (49) zu empfangen und ein erstes Steuersignal (26) zu erzeugen, um einen ersten Betriebsparameter des Gebläses (11) als Reaktion auf den korrigierten Pack-Strömungsbedarf (49) zu steuern, und wobei die Steuerung **da-**

**durch gekennzeichnet ist, dass** sie ferner einen zweiten Steuersignalgenerator umfasst, der konfiguriert ist zum:

Empfangen des Pack-Strömungsbedarfssignals (28) und eines gemessenen Pack-Strömungssignals (40), das eine gemessene Massenströmungsrate eines Luftstroms, der von dem Klimaanlagen-Pack (13) geliefert wird, angibt;

Vergleichen des Pack-Strömungsbedarfssignals (28) mit dem gemessenen Pack-Strömungssignal (40); und

Erzeugen eines zweiten Steuersignals (27), basierend auf dem Vergleich des Pack-Strömungsbedarfs (28) und des gemessenen Pack-Strömungssignals (40), um einen zweiten Betriebsparameter des Gebläses (11) zu steuern.

2. Steuerung (25) nach Anspruch 1, wobei das Gebläsezustandssignal (41) den Druck und/oder die Temperatur des Einlassluftstroms angibt.

3. Steuerung (25) nach Anspruch 1 oder 2, wobei der erste Steuersignalgenerator (50) dazu konfiguriert ist, das erste Steuersignal (26) gemäß einem Steuerplan zu erzeugen, der eine Übertragungsfunktion (54) umfasst, die den korrigierten Pack-Strömungsbedarf als eine Eingabe empfängt und das erste Steuersignal (26) als eine Ausgabe bereitstellt.

4. Steuerung (25) nach Anspruch 3, wobei der Steuerplan eine Vielzahl von Übertragungsfunktionen (55, 56, 57, 58) umfasst und der erste Steuersignalgenerator (50) dazu konfiguriert ist, eine Übertragungsfunktion (55, 56, 57, 58) aus der Vielzahl von Übertragungsfunktionen (55, 56, 57, 58) auszuwählen, um das erste Steuersignal (26) zu erzeugen.

5. Steuerung (25) nach Anspruch 4, wobei jede Übertragungsfunktion (55, 56, 57, 58) der Vielzahl von Übertragungsfunktionen (55, 56, 57, 58) einen Betriebszustand eines Vereisungsschutzsystems des Luftfahrzeugs darstellt, wobei der erste Steuersignalgenerator (50) dazu konfiguriert ist, ein Vereisungsschutzsignal zu empfangen, das einen Betriebszustand des Vereisungsschutzsystems angibt, und eine Übertragungsfunktion (55, 56, 57, 58) des Steuerplans auszuwählen, die den angegebenen Betriebszustand darstellt.

6. Steuerung (25) nach Anspruch 4 oder 5, wobei jede Übertragungsfunktion (55, 56, 57, 58) der Vielzahl von Übertragungsfunktionen (55, 56, 57, 58) einen Betriebszustand eines Gebläses (11) des Luftfahrzeugs darstellt, wobei der erste Steuersignalgenerator (50) dazu konfiguriert ist, ein Signal zu empfangen, das einen Betriebszustand eines Gebläses (11) des Luftfahrzeugs angibt, und eine Übertragungsfunktion (55, 56, 57, 58) auszuwählen, die den angegebenen Betriebszustand des Gebläses (11) darstellt.

7. Steuerung (25) nach Anspruch 1, wobei der erste Betriebsparameter eine variable Geometrieposition des Gebläses (11) ist und der zweite Betriebsparameter eine Gebläsegeschwindigkeit des Gebläses ist.

8. Steuerung (25) nach Anspruch 1, wobei der erste Betriebsparameter eine Gebläsegeschwindigkeit des Gebläses (11) ist und der zweite Betriebsparameter eine variable Geometrieposition des Gebläses ist.

9. Luftfahrzeug-Klimatisierungsanlage (10), umfassend:

ein Gebläse (11), das dazu konfiguriert ist, einen unter Druck stehenden Luftstrom (12) zu liefern;
ein Klimaanlagen-Pack (13), das dazu konfiguriert ist, den unter Druck stehenden Luftstrom (12) von dem Gebläse (11) zu empfangen und einen klimatisierten Luftstrom (14) zu einem Innenraum (15) des Luftfahrzeugs zu liefern;
ein Pack-Strömungsbedarfsuntersystem (29), das dazu konfiguriert ist, einen Pack-Strömungsbedarf (28) zu bestimmen, der eine erwünschte Massenströmungsrate des klimatisierten Luftstroms darstellt, der von dem Klimaanlagen-Pack (13) geliefert wird; und
eine Steuerung des Gebläses (11) nach einem der vorhergehenden Ansprüche.

10. Luftfahrzeug-Klimatisierungsanlage (10) nach Anspruch 9, wobei das Gebläse (11) einen Kompressor mit variabler Geometrie zum Variieren der Massenströmungsrate des Luftstroms, der durch das Gebläse (11) geliefert wird, umfasst.

11. Luftfahrzeug-Klimatisierungsanlage (10) nach Anspruch 9 oder 10, ferner umfassend einen Antrieb (17) zum Antreiben des Gebläses (11) und eine Getriebebaugruppe (24), die den Antrieb (17) wirksam mit dem Gebläse (11) verbindet, wobei die Getriebebaugruppe (24) ein stufenloses Getriebe umfasst, um das Gebläse (11) mit einer Drehzahl zu drehen, die sich von der Drehzahl des Antriebs (17) unterscheidet.

12. Luftfahrzeug-Klimatisierungsanlage (10) nach einem der Ansprüche 9 bis 11, ferner umfassend einen Gebläsesensor (42, 43), der dazu konfiguriert ist, einen Zustand eines Einlassluftstroms, der von dem Gebläse (11) empfangen wird, zu messen, ein Zu-

standssignal (41) zu erzeugen, das den gemessenen Zustand angibt, und das Zustandssignal (41) an die Gebläsesteuerung (25) zu übertragen.

**13.** Luftfahrzeug-Klimatisierungsanlage (10) nach einem der Ansprüche 9 bis 12, ferner umfassend einen Strömungsratensensor (39), der dazu konfiguriert ist, die Massenströmungsrate eines Luftstroms durch das Klimaanlagen-Pack (13) zu messen, ein gemessenes Pack-Strömungsratensignal (40), das die gemessene Massenströmungsrate angibt, zu erzeugen und das gemessene Pack-Strömungsratensignal (40) an die Gebläsesteuerung (25) zu übertragen.

**14.** Luftfahrzeug-Klimatisierungsanlage (10) nach einem der Ansprüche 9 bis 13, ferner umfassend einen Vereisungsschutzsensor, der dazu konfiguriert ist, einen Betriebszustand eines Vereisungsschutzsystems (45) zu erkennen, ein Vereisungsschutzsignal zu erzeugen, das den Betriebszustand des Vereisungsschutzsystems (45) angibt, und das Vereisungsschutzsignal an die Gebläsesteuerung (25) zu übertragen.

**Revendications**

**1.** Dispositif de commande (25) de ventilateur destiné à commander un ventilateur (11) qui fournit un flux d'air sous pression (12) à un groupe de conditionnement d'air (13) d'un système de commande d'environnement d'aéronef (10), ledit dispositif de commande (25) de ventilateur comprenant :
un module de réglage de demande de flux de groupe (48) conçu pour :

recevoir un signal de demande de flux de groupe (28) représentant un débit massique souhaité d'un flux d'air fourni par le groupe de conditionnement d'air (13), et un signal de condition de ventilateur (41) indiquant une condition d'un flux d'air d'admission reçu par le ventilateur (11) ; et
déterminer la demande de flux de groupe corrigée (49) sur la base de la demande de flux de groupe (28) et du signal de condition de ventilateur (41) ; et
un premier générateur de signal de commande (50) conçu pour recevoir la demande de flux de groupe corrigée (49) et générer un premier signal de commande (26) pour commander un premier paramètre de fonctionnement du ventilateur (11) en réponse à la demande de flux de groupe corrigée (49), et le dispositif de commande étant caractérisé en comprenant en outre un second générateur de signal de commande conçu pour :

recevoir le signal de demande de flux de groupe (28) et un signal de flux de groupe mesuré (40) indiquant un débit massique mesuré d'un flux d'air fourni par le groupe de conditionnement d'air (13) ;
comparer le signal de demande de flux de groupe (28) avec le signal de flux de groupe mesuré (40) ; et
générer un second signal de commande (27), sur la base de la comparaison de la demande de flux de groupe (28) et du signal de flux de groupe mesuré (40), pour commander un second paramètre de fonctionnement du ventilateur (11).

**2.** Dispositif de commande (25) selon la revendication 1, ledit signal de condition de ventilateur (41) indiquant la pression et/ou la température du flux d'air d'admission.

**3.** Dispositif de commande (25) selon la revendication 1 ou 2, ledit premier générateur de signal de commande (50) étant conçu pour générer le premier signal de commande (26) selon un programme de commande comprenant une fonction de transfert (54) qui reçoit la demande de flux de groupe corrigée en tant qu'entrée et fournit le premier signal de commande (26) en tant que sortie.

**4.** Dispositif de commande (25) selon la revendication 3, ledit programme de commande comprenant une pluralité de fonctions de transfert (55, 56, 57, 58) et ledit premier générateur de signal de commande (50) étant conçu pour sélectionner une fonction de transfert (55, 56, 57, 58) à partir de la pluralité de fonctions de transfert (55, 56, 57, 58) pour générer le premier signal de commande (26).

**5.** Dispositif de commande (25) selon la revendication 4, chaque fonction de transfert (55, 56, 57, 58) de la pluralité de fonctions de transfert (55, 56, 57, 58) représentant un état de fonctionnement d'un système d'antigivrage de l'aéronef, le premier générateur de signal de commande (50) étant conçu pour recevoir un signal d'antigivrage indiquant un état de fonctionnement du système d'antigivrage et sélectionner une fonction de transfert (55, 56, 57, 58) du programme de commande qui représente l'état de fonctionnement indiqué.

**6.** Dispositif de commande (25) selon la revendication 4 ou 5, chaque fonction de transfert (55, 56, 57, 58) de la pluralité de fonctions de transfert (55, 56, 57, 58) représentant un état de fonctionnement d'un ventilateur (11) de l'aéronef, le premier générateur de signal de commande (50) étant conçu pour recevoir un signal indiquant un état de fonctionnement d'une ventilateur (11) de l'aéronef et sélectionner

une fonction de transfert (55, 56, 57, 58) représentant l'état de fonctionnement indiqué du ventilateur (11).

7. Dispositif de commande (25) selon la revendication 1, ledit premier paramètre de fonctionnement étant une position à géométrie variable du ventilateur (11) et ledit second paramètre de fonctionnement étant une vitesse de ventilateur du ventilateur.

8. Dispositif de commande (25) selon la revendication 1, ledit premier paramètre de fonctionnement étant une vitesse de ventilateur du ventilateur (11) et ledit second paramètre de fonctionnement étant une position à géométrie variable du ventilateur.

9. Système de commande d'environnement d'aéronef (10) comprenant :

un ventilateur (11) conçu pour fournir un flux d'air sous pression (12) ;
un groupe de conditionnement d'air (13) conçu pour recevoir le flux d'air sous pression (12) en provenance du ventilateur (11) et fournir un flux d'air conditionné (14) à un espace intérieur (15) de l'aéronef ;
un sous-système de demande de flux de groupe (29) conçu pour déterminer une demande de flux de groupe (28), représentant un débit massique souhaité du flux d'air conditionné fourni par le groupe de conditionnement d'air (13) ; et
un dispositif de commande de ventilateur (11) selon l'une quelconque des revendications précédentes.

10. Système de commande d'environnement d'aéronef (10) selon la revendication 9, ledit ventilateur (11) comprenant un compresseur possédant une géométrie variable pour faire varier le débit massique du flux d'air fourni par le ventilateur (11).

11. Système de commande d'environnement d'aéronef (10) selon la revendication 9 ou 10, comprenant en outre un dispositif d'entraînement (17) destiné à entraîner le ventilateur (11) et un ensemble de transmission (24) raccordant fonctionnellement le dispositif d'entraînement (17) au ventilateur (11), l'ensemble de transmission (24) comprenant une transmission à variation continue pour faire tourner le ventilateur (11) à une vitesse de rotation qui est différente de la vitesse de rotation du dispositif d'entraînement (17).

12. Système de commande d'environnement d'aéronef (10) selon l'une quelconque des revendications 9 à 11, comprenant en outre un capteur de ventilateur (42, 43) conçu pour mesurer une condition d'un flux d'air d'admission reçu par la ventilateur (11), générer un signal de condition (41) indiquant la condition mesurée, et transmettre le signal de condition (41) au dispositif de commande (25) de ventilateur.

13. Système de commande d'environnement d'aéronef (10) selon l'une quelconque des revendications 9 à 12, comprenant en outre un capteur de débit (39) conçu pour mesurer le débit massique d'un flux d'air à travers le groupe de conditionnement d'air (13), générer un mesuré signal de débit de groupe mesuré (40) indiquant le débit massique mesuré, et transmettre le signal de débit de groupe mesuré (40) au dispositif de commande (25) de ventilateur.

14. Système de commande d'environnement d'aéronef (10) selon l'une quelconque des revendications 9 à 13, comprenant en outre un capteur d'antigivrage conçu pour détecter un état de fonctionnement d'un système d'antigivrage (45), générer un signal d'antigivrage indiquant l'état de fonctionnement du système d'antigivrage (45) et transmettre le signal d'antigivrage au dispositif de commande (25) de ventilateur.

FIG 1

EP 3 835 558 B1

**FIG 2**

41a
41b
46
25
48
49
50
26
28
27
52
53
40
51
47

**FIG 3**

Variable geometry signal

Max

Min

Adjusted flow demand

54

Variable geometry signal

Max

57
58
56
55

Min

Adjusted flow demand

**FIG 4**

Variable geometry signal

Max

58
57
56
55

Min

Adjusted flow demand

**FIG 5**

EP 3 835 558 B1

FIG 6

FIG 7

EP 3 835 558 B1

**EP 3 835 558 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4523517 A
- US 20160369705 A1
- EP 3219620 A2
- EP 1640673 A2